# EUROPEAN PATENT SPECIFICATION

(11) **EP 3 315 057 B1**
(45) Date of publication and mention of the grant of the patent: **19.08.2020**
(21) Application number: 17189741.6
(22) Date of filing: 07.09.2017
(51) Int. Cl.: A47J 43/046, A47J 43/07, A47J 43/27, A47J 47/10

(54) **BLENDER JAR ASSEMBLY AND COVER FOR BLENDER JAR ASSEMBLY**
MIXERGEFÄSSANORDNUNG UND DECKEL FÜR MIXERGEFÄSSANORDNUNG
ENSEMBLE RÉCIPIENT MÉLANGEUR ET COUVERCLE POUR ENSEMBLE RÉCIPIENT MÉLANGEUR

(30) Priority: 12.10.2016 TW 105132926
(43) Date of publication of application: 02.05.2018
(73) Proprietor: Lee, Wen-Ching, Taichung City 408 (TW)
(72) Inventor: Lee, Wen-Ching, Taichung City 408 (TW)
(74) Representative: Straus, Alexander

(56) References cited:
- WO-A1-2015/054740
- WO-A1-2018/014226
- CN-A- 105 942 832
- CN-U- 204 797 528

## Description

### BACKGROUND OF THE INVENTION

### 1. Field of the Invention

The present invention relates to airtight cover designs and more particularly, to a blender jar assembly and its cover.

### 2. Description of the Related Art

Blenders, juicers and slow juicers are adapted for processing vegetables, fruits, nuts and other food into easy-to-eat juice. To the fruit, for example, when the fruit is processed into juice, the juice thus produced will be reacted with oxygen in the air inside the jar and turned into an oxidized color, and the food nutrition will be lost, so, it not only affects appetite, but also affects the taste of the food.

Further, a cover for covering a food processing container generally has a connection channel for accommodating a measuring cup. After insertion of a measuring cup into the connection channel, there is still a clearance kept between the measuring cup and the connection channel for air circulation between the inside of the food processing container and the atmosphere. In application, the measuring cup is removed so that a stirring rod can be inserted through the connection channel into the food processing container to stir up food ingredients. During stirring, outside air can flow into the inside of the food processing container to accelerate the oxidation reaction.

Therefore, many cover designs that eliminate a connection channel and a measuring cup have been created for closing a jar of a blender, juicer or slow juicer for allowing the operation of a vacuum pump to draw air out of the jar so as to reduce oxidation of the juice in the jar. For example, China Patent No. CN 204120771U and China Patent Publication No. CN 103720339A disclose different cover designs that eliminate the arrangement of a measuring cup and a connection channel.

However, these commercial vacuum juicers need the use of a specially designed closed cover that does not allow insertion of a stirring rod into the jar, therefore, for certain food ingredients that are not easy to stir, this design of vacuum juicers will not be effective for food processing. Document CN 105 942 832 A shows another cover for a blender

### SUMMARY OF THE INVENTION

The present invention has been accomplished under the circumstances in view. It is therefore the main object of the present invention to provide a blender jar assembly and a cover for the blender jar assembly, wherein the cover has a connection channel that is adapted for accommodating a measuring cup or for the insertion of a stirring rod and can be fastened with a sealing plug set to achieve an airtight effect for enabling a vacuum pump to perform a vacuuming operation.

To achieve this and other objects of the present invention, a cover for covering an opening of a jar according to the features of claim 1 is provided.

To achieve this and other objects of the present invention, a blender jar assembly comprises a vacuum pump, a blender jar, and the above-described cover.

To achieve this and other objects of the present invention, a cover is provided and covered over an opening of a jar. The cover comprises at least one air hole, an air valve blocking the at least one air hole, and a vacuum pump mounted thereon for performing a vacuuming process to draw air out of the jar through the air valve and to further create a negative pressure in the jar. The cover further comprises a cover body and a sealing plug set. The cover body comprises a top surface, an opposing bottom surface, and a connection channel cut through the top surface and the bottom surface. The sealing plug set covers the connection channel, comprising a sealing device located at the top surface of the cover body. After vacuuming process of the vacuum pump to create the negative pressure in the jar, the sealing device is sucked by the negative pressure and secured to the top surface of the cover body in an airtight manner.

Thus, the sealing plug set of the present invention can be selectively mounted at the cover body, and a commercial measuring cup can be inserted into the connection channel of the cover body for enabling the stirring rod to pass through the connection channel.

Other advantages and features of the blender jar assembly and the cover of the present invention will be fully understood by reference to the following specification in conjunction with the accompanying drawings, in which like reference signs denote like components of structure.

### BRIEF DESCRIPTION OF THE DRAWINGS

FIG. 1 is a schematic drawing illustrating the outer appearance of a blender jar assembly in accordance with the present invention.
FIG. 2 is a top view of the cover body of the blender jar assembly in accordance with the present invention.
FIG. 3 is a sectional elevational view of the cover body of the blender jar assembly in accordance with the present invention.
FIG. 4 is a sectional view taken along line 4-4 of FIG. 2.
FIG. 5 is a bottom view of the cover body of the blender jar assembly in accordance with the present invention.
FIG. 6 is an oblique elevational view of the sealing plug set of the blender jar assembly in accordance with the present invention.
FIG. 7 is a top view of FIG. 6.
FIG. 8 is a sectional view taken along line 8-8 of FIG. 7.
FIG. 9 is an exploded view of the cover body and sealing plug set of the cover of the blender jar assembly in accordance with the present invention.
FIG. 10 is a sectional view of a part of the assembly of the sealing plug set and the cover body, illustrating the lower protruding block at the start point of the associating second leg.
FIG. 11 is a sectional view of a part of the assembly of the sealing plug set and the cover body, illustrating the lower protruding block tightly abutted against the associating second leg.
FIG. 12 is a sectional view of the present invention, illustrating the sealing plug set and the cover body locked together.
FIG. 13 is a schematic sectional view of the present invention, illustrating the air valve of the cover opened from the air holes during a vacuuming operation of the vacuum pump.

### DETAILED DESCRIPTION OF THE INVENTION

A preferred embodiment of a blender jar assembly in accordance with the present invention is described hereinafter in conjunction with the annexed drawings. However, the components, dimension and outer appearance illustrated in the annexed drawings are simply for illustration purpose only but not intended to limit the technical features of the present invention.

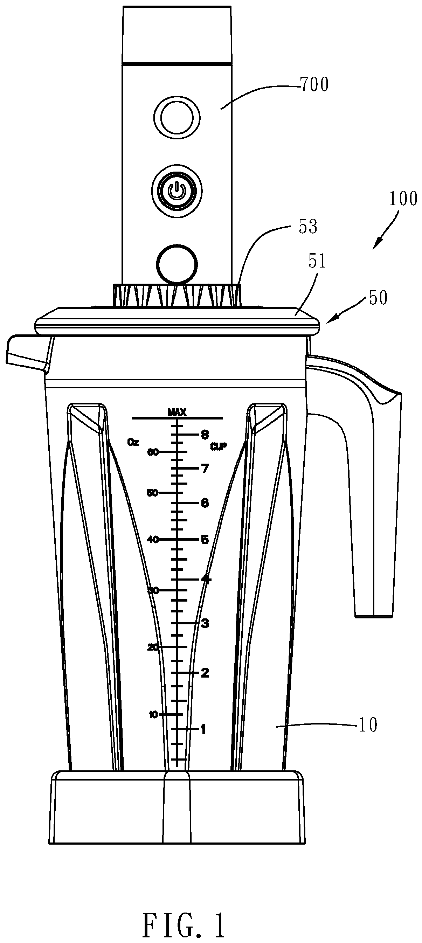

Referring to FIG. 1, a blender jar assembly in accordance with the present invention is shown. The blender jar assembly generally comprises a blender jar **100,** a vacuum pump **700** and a cover **50.** The blender jar **100** comprises a jar body **10** and a stirrer (not shown). The stirrer is mounted in the jar body **10,** and rotatable relative to the jar body **10.** Further, the stirrer can be made in the form of a cutter. The jar body **10** is a container, having an opening **11** (not shown).

The cover **50** covers the opening of the jar body **10.** Further, the cover **50** has a plurality of close-fitting structures located around the periphery thereof to abut against an inside wall of the jar body **10** to form an airtight seal. Further, the cover **50** can cover the opening of the jar body **10** by: inserting a part of the cover **50** into the inside of the jar body **10,** threading an inner/outer thread of the cover **50** into/onto an outer/inner thread of the jar body **10,** or operating a locking device to lock the cover **50** to the jar body **10,** in other words, the cover **50** can be covered on the opening **11** of the jar body **10** in an airtight manner using any of a variety of known techniques. Thus, the shape of the cover **50** is not limited to what is illustrated in the annexed drawings.

The cover **50** comprises a cover body **51** and a sealing plug set **53.** The sealing plug set **53** is detachably connected to the cover body **51.** The vacuum pump **700** is adapted for connection to the sealing plug set **53** for the implementation of a vacuuming operation.

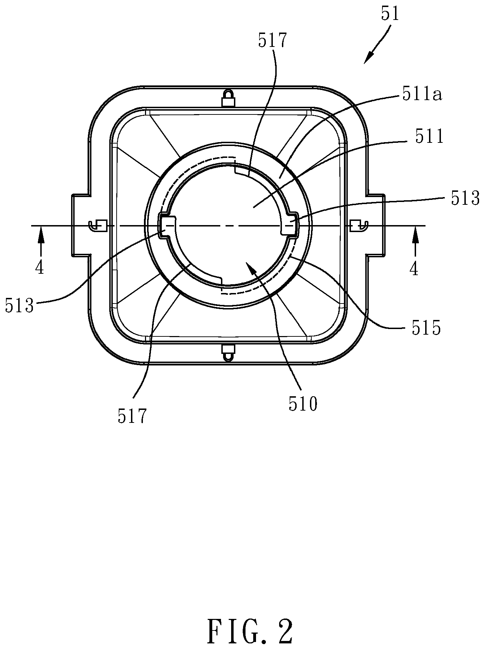

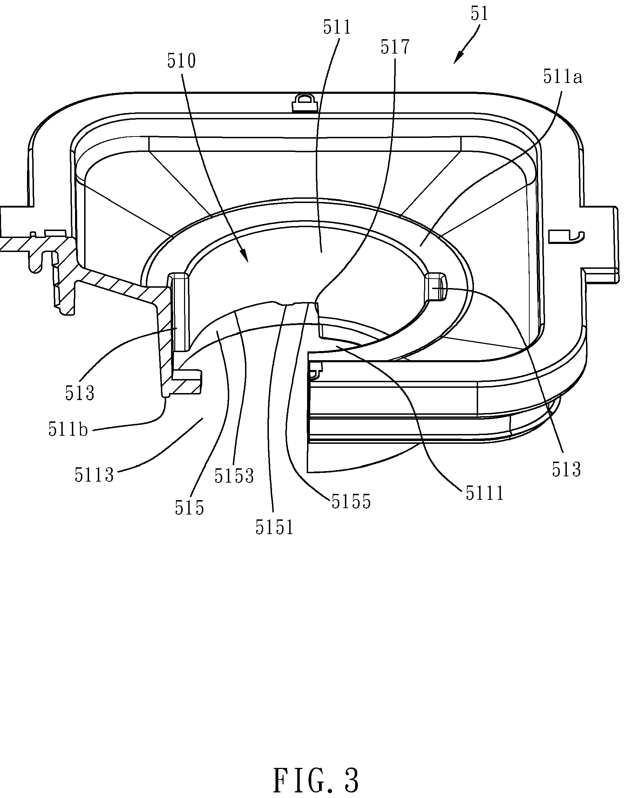

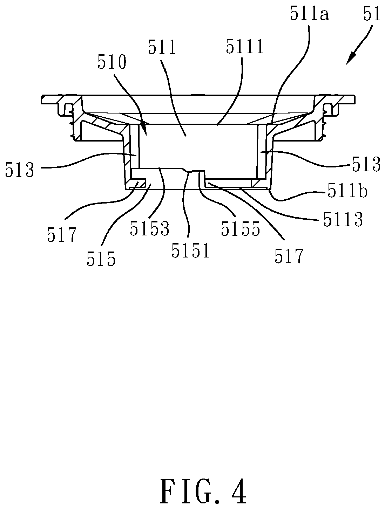

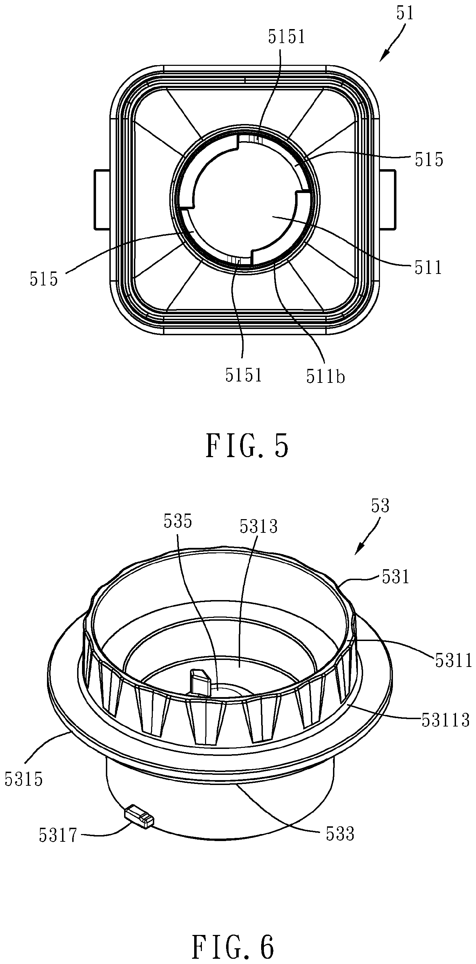

FIG. 2 is a top view of the cover body **51;** FIG. 3 is a sectional elevational view of the cover body **51;** FIG. 4 is a sectional view taken along line 4-4 of FIG. 2; FIG. 5 is a bottom view of the cover body **51.**

As illustrated in FIGS. 2-5, the cover body **51** comprises a top surface **511a,** a bottom surface **511b,** a connection channel **511,** two first legs **513,** two second legs **515** and two stop edges **517.** The connection channel **511** cut through the top surface **511a** and bottom surface **511b** of the cover body **51,** defining an inlet **5111** and an outlet **5113.** The two first legs **513,** the two second legs **515** and the two stop edges **517** constitute a locking system **510** of the cover body **51.** The two first legs **513** respectively extend from the inlet **5111** of the connection channel **511** toward the outlet **5113** of the connection channel **511,** i.e., these two first legs **513** extend vertically downwardly from the inlet **5111** of the connection channel **511.** The two second legs **515** are respectively connected to the two first legs **513.** Further, these two second legs **515** respectively horizontally extends toward the respective first legs **513.** The two stop edges **517** are respectively connected to the second legs **515.** The two first legs **513** and the two second legs **515** exhibit a perpendicular relationship therebetween. Further, the number of the first legs **513** and second legs **515** of the locking system **510** can be more than two, i.e., the number of the first legs **513** and second legs **515** is not limited to 2.

Further, the top surface **511a** of the cover body **51** can be a plane around the connection channel **511;** alternatively, the top surface **511a** can be the whole top surface of the cover body **51;** therefore, the area of the top surface **511a** is not limited to the plane around the connection channel **511** as illustrated in the present preferred embodiment. The bottom surface **511b** is a surface of the cover body **51** opposite to the top surface **511a,** therefore, the bottom surface **511b** is not limited to the area as illustrated in the annexed drawing.

As illustrated in FIG. 2, the two first legs **513** are disposed opposite to each other; the two second legs **515** are disposed opposite to each other; the two stop edges **517** are disposed opposite to each other. In the present preferred embodiment, the two first legs **513,** the two second legs **515** and the stop edges **517** are respectively identical.

Referring to FIGS. 3-5 again, the two second legs **515** each comprise a positioning portion **5151.** In the present preferred embodiment, the positioning portion **5151** is a bump. The two second legs **515** each further comprise a first supporting surface **5153** and a second supporting surface **5155.** The first supporting surfaces **5153** of the second legs **515** are respectively extended from the first legs **513** to respective front sides of the associating positioning portions **5151.** The second supporting surfaces **5155** of the second legs **515** are respectively extended from respective opposing rear sides of the associating positioning portions **5151** to the respective stop edges **517.** Further, the second supporting surfaces **5155** are disposed below the elevation of the two first supporting surfaces **5153.**

In the present preferred embodiment, the two second legs **515** are disposed adjacent to the outlet **5113** of the connection channel **51,** however, in actual application, the two second legs **515** can be disposed at any locations remote from the inlet **5111** of the connection channel **511,** for example, the two second legs **515** can be located on the bottom surface of the connection channel **511.**

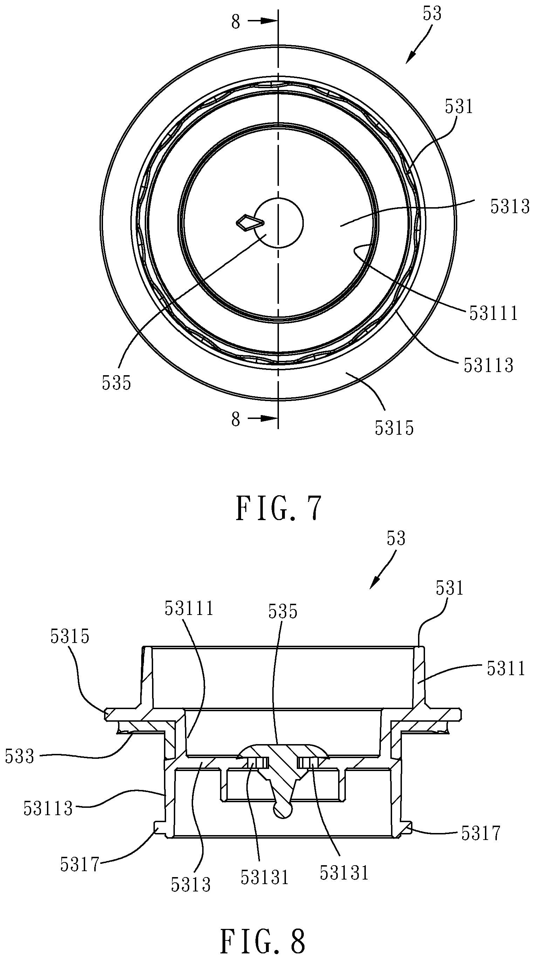

FIG. 6 is an oblique elevational view of the sealing plug set; FIG. 7 is a top view of FIG. 6; FIG. 8 is a sectional view taken along line 8-8 of FIG. 7.

As illustrated in FIGS. 6-8, the sealing plug set **53** comprises an adapter **531,** a sealing device **533** and an air valve **535.** The adapter **531** comprises a hollow annular wall **5311,** a partition wall **5313,** an upper flange **5315** and two lower protruding block **5317.** The partition wall **5313** is connected to the hollow annular wall **5311,** and extended from an inner wall surface **53111** of the hollow annular wall **5311.** The upper flange **5315** is connected to the hollow annular wall **5311,** and extended horizontally outwardly around the periphery of the hollow annular wall **5311.** The two lower protruding blocks **5317** are respectively connected to the hollow annular wall **5311,** and extended horizontally outwardly from an outer wall surface **53113** of the hollow annular wall **5311.**

Further, the hollow annular wall **5311** can be a smooth circular wall, or an annular wall with a multi-angle geometric design, i.e., the inner wall surface **53111** and outer wall surface **53113** of the hollow annular wall **5311** can be flat vertical surfaces or irregular surfaces. In the present preferred embodiment, the hollow annular wall **5311** exhibits a multi-angle geometric design, however, this design is not a limitation. Further, the top of the hollow annular wall **5311** is configured to work as a grip.

Referring to FIG. 8, the partition wall **5313** has a plurality of air holes **53131.** These air holes **53131** cut through the partition wall **5313.** The sealing device **533** is connected to the hollow annular wall **5311** and upper flange **5315** of the adapter **531,** and disposed between the upper flange **5315** and the lower protruding blocks **5317.** The air valve **535** is connected to the partition wall **5313** of the adapter **531** to block the air holes **53131** of the adapter **531.** The sealing device **533** and the air valve **535** are preferably made by soft rubber, such as natural rubber, synthetic rubber or silicone rubber that is capable of achieving an airtight effect.

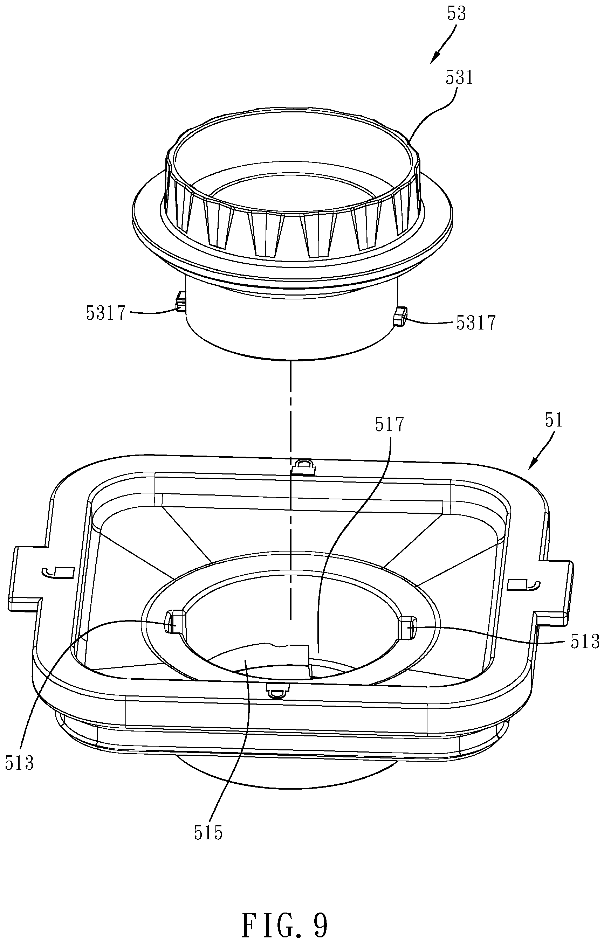

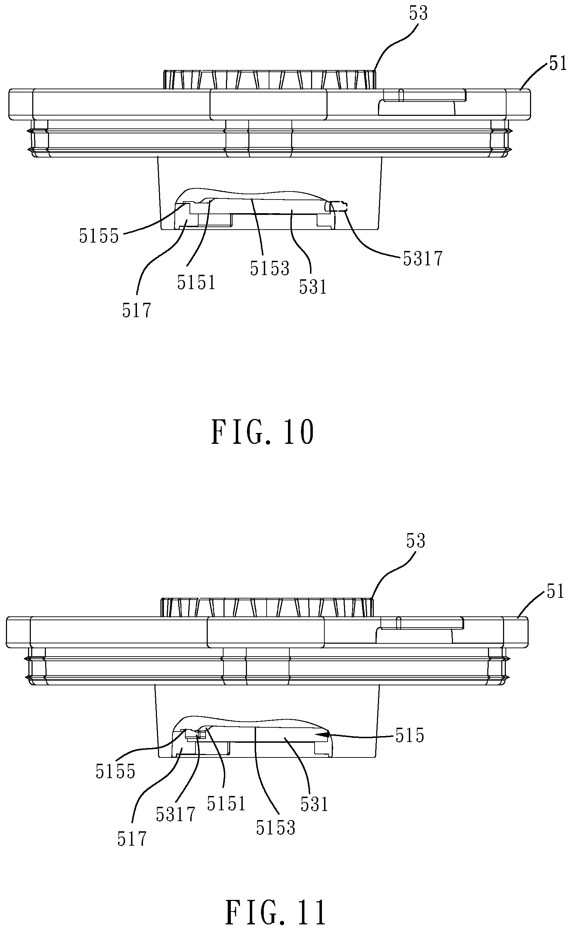

FIG. 9 is an exploded view of the cover body **51** and sealing plug set **53** of the cover **50** of the blender jar assembly; FIG. 10 is a sectional view of a part of the assembly of the sealing plug set **53** and the cover body **50,** illustrating the lower protruding block **5317** at the start point of the associating second leg **515;** FIG. 11 is a sectional view of a part of the assembly of the sealing plug set **53** and the cover body **51,** illustrating the lower protruding block **5317** tightly abutted against the second supporting surface **5155** of the associating second leg **515.**

As illustrated in FIG. 9, the two lower protruding blocks **5317** of the sealing plug set **53** of the adapter **531** are respectively aimed at the two first legs **513** of the cover body **51,** and then, as illustrated in FIG. 10, the sealing plug set **53** is pressed down to move the two lower protruding blocks **5317** of the adapter **531** along the respective first legs **513** to the start points of the respective second legs **515,** and then, as illustrated in FIG. 11, the sealing plug set **53** is rotated to move the two lower protruding blocks **5317** of the adapter **531** from the start points of the respective second legs **515** to the end points of the respective second legs **515,** i.e., to the lower protruding blocks **5317** to abut against the second supporting surface **5155** of the respective second legs **515,** and thus, the sealing plug set **53** and the cover body **51** are locked together.

The positioning portions **5151** of the cover body **51** each have a chamfered edge at the front side so that the two lower protruding blocks **5317** of the adapter **531** can be easily moved along the chamfered edges of the respective positioning portions **5151** to the second supporting surfaces **5155** of the respective second legs **515** into abutment against the respective stop edges **517.**

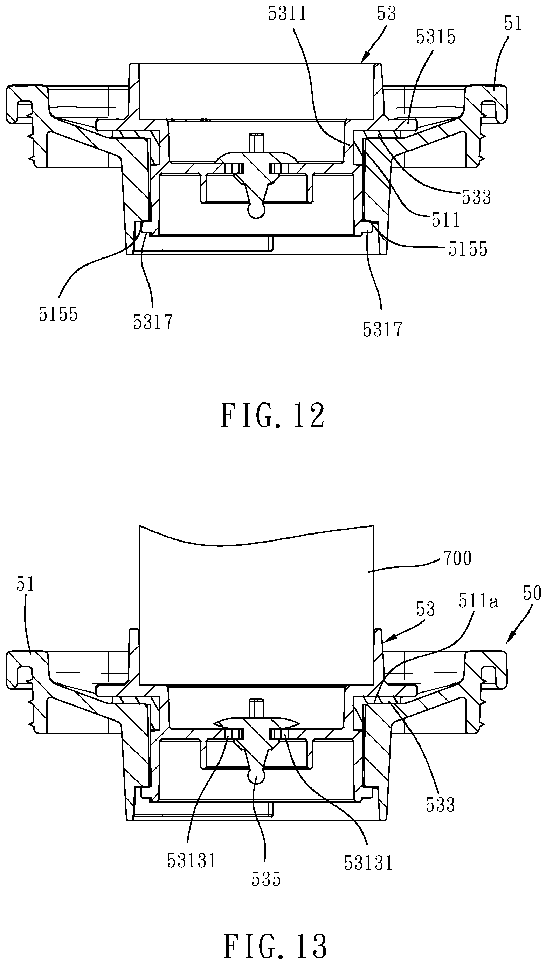

FIG. 12 is a sectional view, illustrating the sealing plug set **53** and the cover body **51** fastened together. When the cover body **51** and the sealing plug set **53** are fastened together, the sealing plug set **53** blocks the connection channel **511** of the cover body **51,** and the sealing device **533** is abutted against the cover body **51.** Since the second supporting surfaces **5155** of the second legs **515** are disposed below the elevation of the first supporting surfaces **5153,** as illustrated in FIG. 11, the lower protruding blocks **5317** are tightly abutted against the respective second supporting surfaces **5155** and the upper flange **5315** is pressed on the sealing device **533** when the cover body **51** and the sealing plug set **53** are fastened together, and thus, the sealing device **533** is elastically deformed and squeezed in between the upper flange **5315** and the cover body **51** tightly.

Thus, the sealing plug set **53** is locked to the cover body **51** with the sealing device **533** held down tightly by the hollow annular wall **5311** and upper flange **5315** of the adapter **531** of the sealing plug set **53** and the cover body **51** to achieve an airtight effect.

In the present preferred embodiment, the sealing plug set **53** is inserted through the top surface of the cover body **51** into the inside of the cover body and then locked in position by the locking system. However, in actual application, the sealing plug set **53** can be configured for insertion through the bottom surface of the cover body **51** into the inside of the cover body and then locked in position by the locking system. Therefore, the connection between the sealing plug set **53** and the cover body **51** can be achieved by the method described above, other locking system designs can be selectively used to achieve connection between the sealing plug set **53** and the cover body **51** without departing from the scope of the present invention as defined in the appended claims.

Referring to FIG. 13, the vacuum pump **700** can be mounted in the sealing plug set **53** of the cover **50** and operated to draw air out of the blender jar assembly. When a vacuuming operation is performed, the air valve **535** is partially elastically deformed to open the air holes **53131,** enabling the internal air to be drawn out of the jar body to create a vacuum so that the food ingredients and fluid in the jar body can be maintained fresh.

It should be noted that, during the vacuuming operation, the negative pressure in the jar body **10** of the blender jar **100** thus created will suck the sealing plug set **53** to achieve airtight connection between the sealing device **533** of the sealing plug set **53** and the top surface **511a** of the cover body **51,** maintaining the negative pressure in the jar body **10** of the blender jar **100.** The negative pressure means the internal air of the jar body **10** of the blender jar **100** has been drawn out of the jar body **10** through the air holes **53131** by the vacuum pump **700** to create a vacuum in the jar body **10** of the blender jar **100.**

The cover body locking system can be omitted when the sealing device **533** is used to achieve airtight connection between the sealing plug set **53** and the cover body **51,** that is, before creation of a vacuum in the jar body **10** of the blender jar **100,** the sealing plug set **53** is not fixedly connected with the cover body **51;** after creation of a vacuum in the jar body **10** of the blender jar **100,** the sealing device **533** is naturally sucked by the negative pressure, achieving airtight connection between the sealing plug set **53** and the cover body **51.**

Finally, upon completion of the vacuuming operation, the vacuum pump **700** can be separated from the cover **50,** and the air valve **535** returns to the state shown in FIG. 12 to block the air holes **53131,** maintaining the negative pressure condition inside the jar body **10** of the blender jar **100.**

In the present preferred embodiment, the connection between the cover body **51** and the sealing plug set **53** is achieved by means of the locking system of the cover body **51** and the two lower protruding blocks **5317** of the sealing plug set **53.** However, in another embodiment not according to the invention, any other equivalent structure such as screw threads can be employed to substitute for the locking system; in this case, the sealing plug set **53** is configured to provide a mating thread for engagement with the thread of the locking system of the cover body **51.** Thus, the locking system and the connection structure of the sealing plug set **53** are not limited to the above-described design of the present preferred embodiment.

Further, if the two lower protruding blocks are respectively located at the two second legs for enabling the cover body and the sealing plug set to be connected in an airtight manner. In this case, the two stop edges can be omitted. Further, the sealing device is adapted to achieve airtight connection between the cover body and the adapter, thus, the sealing device can be an O-ring, and the number is not limited to 1.

In the present preferred embodiment, the air holes and the air valve are located at the sealing plug set, however, in another embodiment that is not according to the invention, the air holes and the air valve can be located at the cover body. The sealing plug set can be connected to the cover body by the locking system to achieve airtight connection with the cover body, or, an airtight connection between the sealing plug set and the cover body can be achieved upon creation of a negative pressure to suck the sealing plug set, and thus, the air holes and the air valve can be located at the cover body without limiting to the positioning design of the preferred embodiment.

Although a particular embodiment of the invention has been described in detail for purposes of illustration, various modifications and enhancements may be made without departing from the scope of the invention. Accordingly, the invention is not to be limited except as by the appended claims.

## Claims

1. A cover (50) for covering an opening (11) of a jar (100), said cover comprising a cover body (51) and a sealing plug set (53), said cover body (51) comprising a top surface (511a), a bottom surface (511b), a connection channel (511) and a locking system (510), said connection channel (511) being cut through said top surface (511a) to said bottom surface respectively defining an inlet and an outlet, said locking system (510) being formed on said cover body (51) within said connection channel (511) and extending from the inlet said sealing plug set (53) is detachably connectable to said cover body (51), said sealing plug set (53) being connectable by said locking system (510) of said cover body (51) to cover said connection channel (511) of said cover body (51), said sealing plug set (53) comprising at least one air hole (53131) and an air valve (535), said air valve (535) being adapted for blocking said air hole (53131), wherein said sealing plug set (53) further comprises an adapter comprising a hollow annular wall (5311), a partition wall (5313), an upper flange (5315) and two lower protruding blocks (5317), said hollow annular wall being configured to receive a vacuum pump, said upper flange (5315) being adapted for pressing on said cover body (51), said lower protruding blocks (5317) being disposed below the elevation of said upper flange (5315) and adapted for abutting against said locking system (510) tightly, wherein said sealing plug set (53) further comprises a sealing device (533), said sealing device (533) being connected to said adapter (531) at said upper flange (5315) and disposed between said upper flange (5315) and said two lower protruding blocks (5317) and abutted against a top surface (511a) of said cover body (51) when the sealing plus is connected to the locking system; said at least one air hole (53131) is located in said partition wall (5313); said air valve (535) is connected to said adapter (531).

2. The cover (50) as claimed in claim wherein
said locking system (510) comprises two first legs (513) and two second legs (515), said first legs (513) being respectively extended from said inlet (5111) of said connection channel (511) toward said outlet (5113) for the passing of said lower protruding blocks (5317), said second legs (515) being respectively horizontally extended from said first legs (513) and adapted for abutting against the respective said lower protruding blocks (5317) tightly.

3. The cover (50) as claimed in claim 2, wherein said second legs (515) each comprise a first supporting surface (5153), a second supporting surface (5155) and a positioning portion (5151), the said two first supporting surfaces (5153) being respectively extended from the said two first legs (513) to respective front edges of the associating said positioning portions (5151), the two said second supporting surfaces (5155) being respectively backwardly extended from respective opposing rear edges of the associating positioning portions (5151), the two said lower protruding blocks (5317) being respectively abutted against the respective said second supporting surfaces (5155).

4. The cover (50) as claimed in claim 2, wherein the front edge of each said positioning portion (5151) is a chamfered edge.

5. The cover (50) as claimed in claim 2 or 3, wherein said locking system (510) comprises two stop edges (517) respectively located at respective rear sides of the respective said second legs (515).

6. A blender jar (100) assembly, comprising:
a vacuum pump (700);
a blender jar (100); and
a cover (50) as claimed in any of claims 1-5.

## Patentansprüche

1. Abdeckung (50) zum Abdecken einer Öffnung (11) eines Gefäßes (100), worin die Abdeckung einen Abdeckungskörper (51) und einen Verschlussstopfensatz (53) umfasst, worin der Abdeckungskörper (51) eine obere Oberfläche (511a), eine untere Oberfläche (511b), einen Verbindungskanal (511) und ein Verriegelungssystem (510) umfasst, worin der Verbindungskanal (511) durch die obere Oberfläche (511a) zu der unteren Oberfläche (511b) geht, und entsprechend einen Einlass und einen Auslass definiert, worin das Verriegelungssystem (510) auf dem Abdeckungskörper (51) in dem Verbindungskanal (511) ausgebildet ist und sich von dem Einlass erstreckt,
worin der Verschlussstopfensatz (53) entfernbar mit dem Abdeckungskörper (51) verbindbar ist, worin der Verschlussstopfensatz (53) durch das Verriegelungssystem (510) des Abdeckungskörpers (51) verbindbar ist, um den Verbindungskanal (511) des Abdeckungskörpers (51) abzudecken, worin der Verschlussstopfensatz (53) mindestens ein Luftloch (53131) und ein Luftventil (535) umfasst, worin das Luftventil (535) angepasst ist, das Luftloch (53131) zu blockieren, worin der Verschlussstopfensatz (53) weiter umfasst, einen Adapter, der eine hohle Ringwand (5311), eine Trennwand (5313), einen oberen Flansch (5315) und zwei untere vorstehende Blöcke (5317) umfasst, worin die hohle Ringwand ausgestaltet ist, eine Unterdruckpumpe aufzunehmen, worin der obere Flansch (5315) angepasst ist, auf den Abdeckungskörper (51) zu drücken, worin die unteren vorstehenden Blöcke (5317) unterhalb der Erhebung des oberen Flansches (5315) angeordnet und angepasst sind, gegen das Verriegelungssystem (510) fest aufzuliegen, worin der Verschlussstopfensatz (53) weiter eine Verschlusseinrichtung (533) umfasst, worin die Verschlusseinrichtung (533) an dem oberen Flansch (5315) mit dem Adapter (531) verbunden und zwischen dem oberen Flansch (5315) und den zwei unteren vorstehenden Blöcken (5317) angeordnet ist und gegen eine obere Oberfläche (511a) des Abdeckungskörpers (51) aufliegt, wenn der Verschlussstopfen mit dem Verriegelungssystem verbunden ist; worin mindestens ein Luftloch (53131) in der Trennwand (5313) angeordnet ist; worin das Luftventil (535) mit dem Adapter (531) verbunden ist.

2. Abdeckung (50) nach Anspruch 1, worin das Verriegelungssystem (510) zwei erste Beine (513) und zwei zweite Beine (515) umfasst, worin sich die ersten Beine (513) zum Hindurchgehen der unteren vorstehenden Blöcke (5317) entsprechend von dem Einlass (5111) des Verbindungskanals (511) zu dem Auslass (5113) erstrecken, worin sich die zweiten Beine (515) entsprechend horizontal von den ersten Beine (513) erstrecken und angepasst sind, gegen die entsprechenden unteren vorstehenden Blöcke (5317) fest aufzuliegen.

3. Abdeckung (50) nach Anspruch 2, worin die zweiten Beine (515) jeweils eine erste Stützoberfläche (5153), eine zweite Stützoberfläche (5155) und einen Anordnungsbereich (5151) umfassen, worin sich die zwei ersten Stützoberflächen (5153) entsprechend von den zwei ersten Beinen (513) zu den entsprechenden Vorderrändern der damit verbundenen Anordnungsbereiche (5151) erstrecken, worin sich die zwei zweiten Stützoberflächen (5155) entsprechend von den entsprechenden abgewandten Hinterrändern der damit verbundenen Anordnungsbereiche (5151) rückwärts erstrecken, worin die zwei entsprechend unteren vorstehenden Blöcke (5317) gegen die entsprechenden zweiten Stützoberflächen (5155) aufliegen.

4. Abdeckung (50) nach Anspruch 2, worin der Vorderrand jedes Anordnungsbereiches (5151) ein angeschrägter Rand ist.

5. Abdeckung (50) nach Anspruch 2 oder 3, worin das Verriegelungssystem (510) zwei Stoppränder (517) umfasst, die entsprechend an Hinterseiten der entsprechenden zweiten Beine (515) angeordnet sind.

6. Mixergefäß- (100) Aufbau, welcher umfasst:
eine Unterdruckpumpe (700);
ein Mixergefäß (100); und
eine Abdeckung (50) nach einem der Ansprüche 1-5.

## Revendications

1. Couvercle (50) pour recouvrir une ouverture (11) d'un récipient (100), ledit couvercle comprenant un corps de couvercle (51) et un ensemble bouchon d'étanchéité (53), ledit corps de couvercle (51) comprenant une surface supérieure (511a), une surface inférieure (511b), un canal de liaison (511) et un système de verrouillage (510), ledit canal de liaison (511) étant découpé à travers ladite surface supérieure (511a) vers ladite surface inférieure (511b), définissant respectivement une entrée et une sortie, ledit système de verrouillage (510) étant formé sur ledit corps de couvercle (51) à l'intérieur dudit canal de liaison (511) et s'étendant à partir de l'entrée, ledit ensemble bouchon d'étanchéité (53) pouvant être relié de manière amovible audit corps de couvercle (51), ledit ensemble bouchon d'étanchéité (53) pouvant être relié par ledit système de verrouillage (510) dudit corps de couvercle (51) pour recouvrir ledit canal de liaison (511) dudit corps de couvercle (51), ledit ensemble bouchon d'étanchéité (53) comprenant au moins un trou d'air (53131) et une soupape à air (535), ladite soupape à air (535) étant conçue pour bloquer ledit trou d'air (53131), ledit ensemble bouchon d'étanchéité (53) comprenant en outre un adaptateur comprenant une paroi annulaire creuse (5311), une paroi de séparation (5313), une bride supérieure (5315) et deux blocs saillants inférieurs (5317), ladite paroi annulaire creuse étant conçue pour recevoir une pompe à vide, ladite bride supérieure (5315) étant conçue pour être pressée sur ledit corps de couvercle (51), lesdits blocs saillants inférieurs (5317) étant disposés au-dessous de l'élévation de ladite bride supérieure (5315) et conçus pour venir en butée étroitement contre ledit système de verrouillage (510), ledit ensemble bouchon d'étanchéité (53) comprenant en outre un dispositif d'étanchéité (533), ledit dispositif d'étanchéité (533) étant relié audit adaptateur (531) au niveau de ladite bride supérieure (5315) et disposé entre ladite bride supérieure (5315) et lesdits deux blocs saillants inférieurs (5317) et venant en butée contre une surface supérieure (511a) dudit corps de couvercle (51) lorsque le bouchon d'étanchéité est relié au système de verrouillage ; ledit au moins un trou d'air (53131) étant situé dans ladite paroi de séparation (5313) ; ladite soupape à air (535) étant reliée audit adaptateur (531).

2. Couvercle (50) selon la revendication 1, ledit système de verrouillage (510) comprenant deux premières pattes (513) et deux deuxièmes pattes (515), lesdites premières pattes (513) s'étendant respectivement à partir de ladite entrée (5111) dudit canal de liaison (511) vers ladite sortie (5113) pour le passage desdits blocs saillants inférieurs (5317), lesdites deuxièmes pattes (515) s'étendant respectivement horizontalement à partir desdites premières pattes (513) et étant conçues pour venir en butée étroitement contre lesdits blocs saillants inférieurs (5317) respectifs.

3. Couvercle (50) selon la revendication 2, lesdites deuxièmes pattes (515) comprenant chacune une première surface support (5153), une deuxième surface support (5155) et une partie de positionnement (5151), lesdites deux premières surfaces support (5153) s'étendant respectivement à partir desdites deux premières pattes (513) vers des bords avant respectifs desdites parties de positionnement (5151) qui s'associent, lesdites deux deuxièmes surfaces support (5155) s'étendant respectivement vers l'arrière à partir des bords arrière opposés respectifs des parties de positionnement (5151) qui s'associent, lesdits deux blocs saillants inférieurs (5317) venant respectivement en butée contre lesdites deuxièmes surfaces support (5155) respectives.

4. Couvercle (50) selon la revendication 2, le bord avant de chaque dite partie de positionnement (5151) étant un bord chanfreiné.

5. Couvercle (50) selon la revendication 2 ou 3, ledit système de verrouillage (510) comprenant deux bords d'arrêt (517) situés respectivement sur des côtés arrière respectifs desdites deuxièmes pattes (515) respectives.

6. Ensemble récipient mélangeur (100), comprenant ;
une pompe à vide (700) ;
un récipient mélangeur (100) ; et
un couvercle (50) selon l'une quelconque des revendications 1 à 5.
